Europäisches Patentamt

European Patent Office

Office européen des brevets

(19)

(11) Numéro de publication: **0 230 837**
**B1**

(12) **FASCICULE DE BREVET EUROPEEN**

(45) Date de publication du fascicule du brevet:
**13.12.89**

(21) Numéro de dépôt: **86402942.6**

(22) Date de dépôt: **26.12.86**

(51) Int. Cl.⁴: **B60J 1/02, E06B 3/54**

(54) Dispositif de positionnement vertical notamment, pour pare-brise.

(30) Priorité: **31.12.85 FR 8519466**

(43) Date de publication de la demande:
**05.08.87 Bulletin 87/32**

(45) Mention de la délivrance du brevet:
**13.12.89 Bulletin 89/50**

(84) Etats contractants désignés:
**BE DE ES GB IT**

(56) Documents cités:
**EP-A- 0 072 277**
**US-A- 3 836 118**

(73) Titulaire: **REGIE NATIONALE DES USINES RENAULT,**
**Boîte postale 103 8-10 avenue Emile Zola,**
**F-92109 Boulogne-Billancourt(FR)**

(72) Inventeur: **Massie, Bernard, 24, rue d'Alsace,**
**F-92300 Levallois-Perret(FR)**
Inventeur: **Leroy, Claude, 1554, Allée du Vieux Pont de**
**Sèvres, F-92100 Boulogne Billancourt(FR)**

(74) Mandataire: **Chassagnon, Jean-Alain et al, REGIE**
**NATIONALE DES USINES RENAULT (S.0267),**
**F-92109 Boulogne-Billancourt Cédex09(FR)**

ACTORUM AG

## Description

La présente invention se rapporte à un dispositif de maintien en position verticale notamment pour pare-brise de véhicule automobile.

Les montages des pare-brises se font de plus en plus par collage direct du pare-brise sur le fond de la baie. Le problème qui se pose est de maintenir ce pare-brise dans la position voulue à l'intérieur de la baie pendant la polymérisation de la colle. On utilise pour cela des cales qui sont placées sous le pare-brise et doivent être réglées par un opérateur ou deux opérateurs (voir par exemple US-A 3 836 118). Il est aussi utilisé des cales réglables comportant une lumière inclinée où sont aménagées des crans qui coopèrent avec un goujon soudé. Ce dispositif nécessite aussi l'intervention d'un opérateur.

Le but de la présente invention est de proposer un dispositif de maintien en position verticale, notamment pour pare-brise d'un véhicule automobile, qui assure un montage correct sans réglage d'aucune sorte nécessitant l'intervention d'un opérateur.

Ce but est atteint par le dispositif défini par la revendication 1.

Selon un mode de réalisation de l'invention, la partie souple est constituée par des éléments externes s'appuyant les uns sur les autres en s'évasant.

Selon un mode de réalisation de l'invention, la partie souple est constituée par des éléments internes s'appuyant les uns sur les autres en rentrant.

Le dispositif selon l'invention présente ainsi l'avantage de permettre de positionner le pare-brise dans la baie de façon précise et rapide. De plus il ne nécessite aucune intervention de réglage d'un opérateur ce qui est un facteur d'abaissement du prix de revient du montage et de qualité de l'ensemble, tout en faisant appel à des systèmes de maintien à réglage automatique intégré peu onéreux.

D'autres caractéristiques et avantages de la présente invention ressortiront de la description qui suit de mode de réalisation donné à titre d'exemple en référence aux dessins annexés sur lesquels :

- la figure 1 est une vue de profil de l'ensemble d'un des systèmes de maintien selon l'invention avant mise en place du pare-brise ;
- la figure 2 est une vue identique à la figure 1 avec le pare-brise mis en place ;
- la figure 3 est une coupe III - III de la figure 2 ;
- la figure 4 est une coupe IV - IV de la figure 2 ;
- la figure 5 est une coupe identique à la figure 3 d'un deuxième mode de réalisation de l'invention ;
- la figure 6 est une coupe identique à la figure 4 du deuxième mode de réalisation de l'invention.

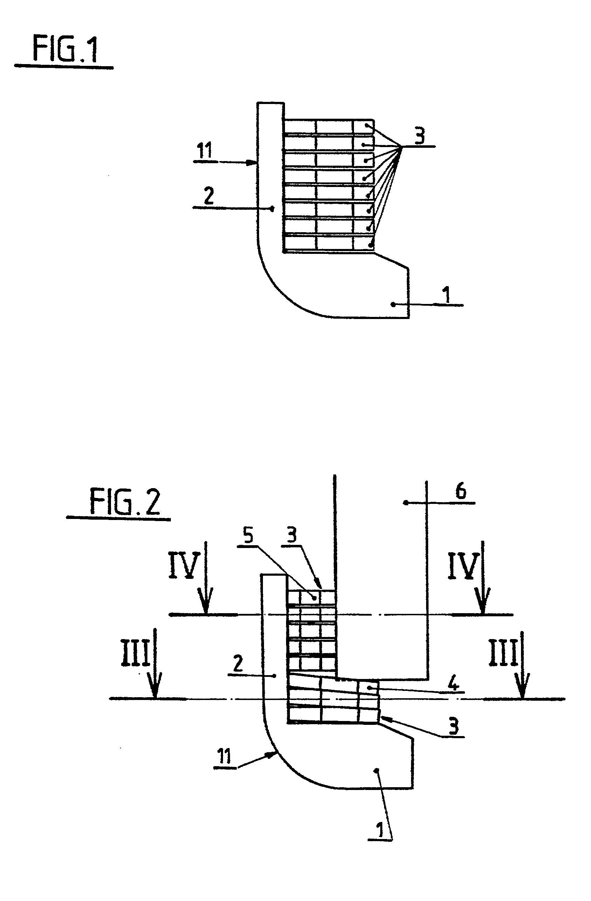

Le dispositif de positionnement vertical selon l'invention, qui s'applique au montage d'un pare-brise 6 de véhicule automobile, est représenté sur les figures 1 et 2.

Le dispositif comprend au moins deux systèmes de maintien à réglage automatique intégré référencé 11 dans leur ensemble. Ces systèmes 11 sont disposés dans la traverse inférieure de la baie, non représentée sur les figures, de manière à pouvoir supporter le pare-brise 6.

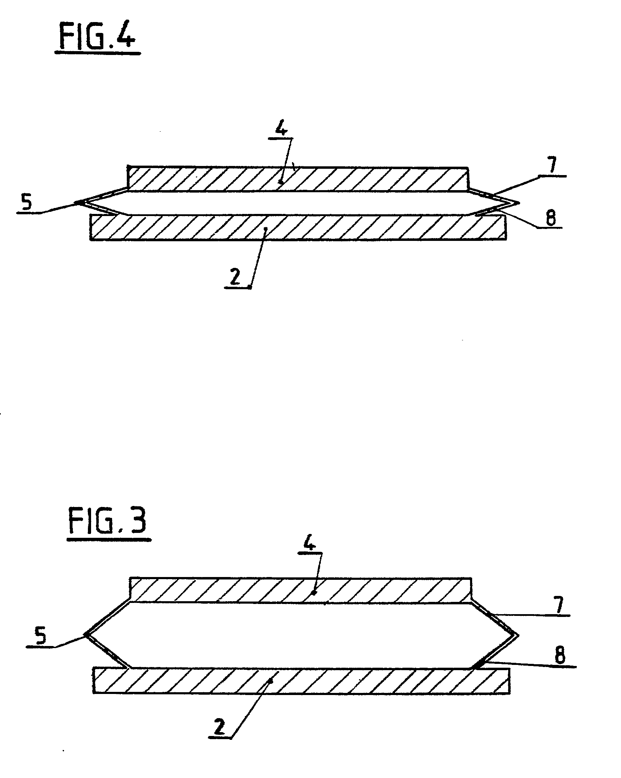

Chaque système de maintien à réglage automatique intégré 11 comporte une semelle 1 qui porte à une de ses extrémités une aile 2. Des éléments rétractables 3 sont disposés parallèlement les uns par rapport aux autres, et séparés les uns des autres par un faible intervalle. Ces éléments rétractables 3 sont solidaires de l'aile 2, qui fait fonction de face d'accrochage. Chacun de ces éléments rétractables 3 est constitué d'une partie massive 4 et d'une partie souple 5, qui lie ladite partie massive 4 à l'aile 2, comme cela est représenté sur les figures 3, 4, 5 et 6.

La partie massive 4 de chacun des éléments rétractables 3 concernés coopère au support du pare-brise 6, tandis que la partie souple 5 permet l'effacement de chacun des éléments rétractables 3, qui sont situés derrière ledit pare-brise 6. La figure 2 montre clairement le positionnement vertical du pare-brise 6, qui est assuré au moyen de systèmes de maintien à réglage automatique intégré 11. Dans le cas de la figure 2, trois éléments rétractables supportent le pare-brise 6 au moyen de leur partie massive 4, tandis que les cinq autres éléments rétractables se sont effacés derrière ledit pare-brise 6 par l'intermédiaire de leur partie souple 5.

Les figures 3 et 4 montrent un premier mode de réalisation des éléments rétractables 3, dans lesquels la partie souple 5 est constituée par des éléments externes 7 et 8 s'appuyant les uns sur les autres en s'évasant , lorsque la partie massive 4 se rapproche de l'aile 2 comme cela est représenté sur la figure 4.

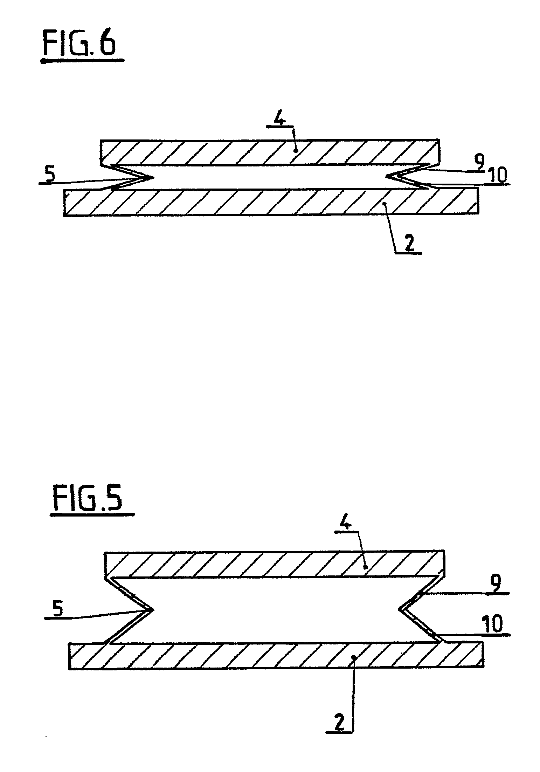

Les figures 5 et 6 montrent un deuxième mode de réalisation des éléments rétractables 3, dans lesquels la partie souple 5 est constituée par des éléments internes 9 et 10 s'appuyant les uns sur les autres en rentrant, lorsque la partie massive 4 se rapproche de l'aile 2 comme cela est représenté sur la figure 6.

Un autre mode de réalisation de l'invention, qui n'est pas représenté sur les figures consiste à remplacer la partie souple 5 par une partie mince et rigide de forme appropriée , de manière à ce que cette partie mince et rigide se désolidarise sous un effort prédéterminé de sa face d'accrochage, qui est l'aile 2, pour permettre l'effacement de chacun des éléments rétractables situés derrière le pare-brise 6.

## Revendications

1. Dispositif de maintien en position verticale d'un pare-brise dans un encadrement d'un véhicule automobile, comportant au moins deux systèmes de maintien (11) à réglage automaique fixés dans la traverse inférieure de l'encadrement, chaque système de maintien (11) comportant:

   – une semelle (1) qui porte à une de ses extrémités une aile (2)

   – une série d'éléments rétractables (3) identiques disposés le long de l'aile, chacun d'eux (3) étant constitué d'une partie massive (4) reliée à l'aile (2) par l'intermédiaire soit d'une partie souple élastique (5) soit d'une partie mince et rigide mais qui, sous un effort prédéterminé, se désolidarise de l'aile (2) de telle sorte que, lors de la mise et du maintien en position verticale du pare-brise dans l'encadrement, la semelle (1) et la partie massive (4) de chacun des éléments rétractables (3) situés en dessous du pare-brise soutiennent le chant du pare-brise, chacun des autres éléments rétractables (3) s'effaçant derrière la face intérieure du pare-brise soit à l'encontre de la force élastique développée par la partie souple élastique (5) de chacun de ceux-ci (3), soit lorsque la partie mince et rigide de chacun de ceux-ci (3) se désolidarise de l'aile (2) sous un effort prédéterminé.

2. Dispositif de positionnement selon la revendication 2, caractérisé en ce que la partie souple (5) est constituée par des éléments externes (7), (8) s'appuyant les uns sur les autres en s'évasant.

3. Dispositif de positionnement selon la revendication 2, caractérisé en ce que la partie souple (5) est constituée par des éléments internes (9), (10) s'appuyant les uns sur les autres en rentrant.

**Patentansprüche**

1. Vorrichtung zur Einhaltung der senkrechten Stellung einer Windschutzscheibe in einem Rahmen eines Kraftfahrzeugs mit wenigstens zwei automatisch einstellbaren Haltesystemen (11), die im unteren Querrahmen angeordnet sind, wobei jedes Haltesystem (11) aufweist:
   – eine Führung (1), die an einer ihrer Seiten mit einer Rippe (2) versehen ist,
   – eine Reihe von identischen einziehbaren Teilen (3), die entlang der Rippe angeordnet sind, wobei jedes von ihnen (3) aus einem massiven Abschnitt (4) besteht, der mit der Rippe (2) entweder über einen weichen elastischen Abschnitt verbunden ist, wobei letzterer sich bei einer gegebenen Kraft von der Rippe (2) trennt,
   – derart, daß während des Einsetzens und des Haltens in einer senkrechten Stellung der Windschutzscheibe in dem Rahmen die Führung (1) und der massive Abschnitt (4) eines jeden einziehbaren Teils (3) unterhalb der Windschutzscheibe die Kante der Scheibe unterstützen, während alle anderen einziehbaren Teile (3) sich hinter die untere Fläche der Scheibe zurückziehen, entweder aufgrund der elastischen Kraft, die vom weichen elastischen Abschnitt (5) eines jeden Teils (3) ausgeht oder weil sich der dünne steife Abschnitt eines jeden Teils (3) unter Einwirkung einer bestimmten Kraft von der Rippe (2) trennt.

2. Vorrichtung nach Anspruch 1, dadurch gekennzeichnet, daß der weiche Abschnitt (5) aus äußeren Teilen (7, 9) besteht, die sich aufeinander abstützen und dabei aufweiten.

3. Vorrichtung nach Anspruch 1, dadurch gekennzeichnet, daß der weiche Abschnitt (5) aus inneren Teilen (9, 10) besteht, die sich aufeinander abstützen und ineinander eingreifen.

**Claims**

1. A device for holding a windscreen in a vertical position in a frame of a motor vehicle comprising at least two holding systems (11) with automatic adjustement which are fixed in the lower transverse portion of the frame, each holding system (11) comprising:
   – a base portion (1) which at one of its ends carries a limb (2), and
   – a series of identical retractable elements (3) disposed along the limb, each of the elements (3) being formed by a solid portion (4) connected to the limb (2) by way either of an elastic flexible portion (5) or a thin rigid portion which under a predetermined force separates from the limb (2) in such a way that when the windscreen is set in position and held in a vertical position in the frame the base portion (1) and the solid portion (4) of each of the retractable elements (3) which are disposed beneath the windscreen support the edge of the windscreen, each of the other retractable elements (3) retracting behind the inward face of the windscreen either against the elastic force developed by the elastic flexible portion (5) of each thereof (3) or when the thin rigid portion of each thereof (3) separates from the limb under a predetermined force.

2. A positioning device according to claim 2 characterized in that the flexible portion (5) is formed by external elements (7, 8) which bear against each other in an outwardly extending configuration.

3. A positioning device according to claim 2 characterized in that the flexible portion (5) is formed by internal elements (9, 10) which bear against each other in an inwardly extending configuration.

## FIG.1

## FIG.2

## FIG.4

## FIG.3

## FIG.6

## FIG.5